# FASCICULE DE BREVET EUROPEEN

(11) **EP 1 200 716 B1**
(45) Date de publication et mention de la délivrance du brevet: **27.04.2005**
(21) Numéro de dépôt: 99931344.8
(22) Date de dépôt: 13.07.1999
(51) Int. Cl.: F01N 3/28, B23P 15/00

(54) **PROCEDE DE REALISATION DE BOITES CATALYTIQUES ET DISPOSITIF POUR LA MISE EN OEUVRE DE CE PROCEDE**
VERFAHREN ZUR HERSTELLUNG VON KATALYSATOREN UND ANORDNUNG ZUR DURCHFÜHRUNG DES VERFAHRENS
METHOD FOR MAKING CATALYST CONTAINERS AND IMPLEMENTING DEVICE

(43) Date de publication de la demande: 02.05.2002
(73) Titulaire: WIMETAL S.A., 67160 Wissembourg (FR)
(72) Inventeur: HARLE, Guillaume, F-67500 Haguenau (FR); IONESCU, Georges, F-67500 Haguenau (FR); LEHMANN, Adrien, F-67160 Schleithal (FR); FREY, Daniel, F-67160 Altenstadt (FR); ROEGLER, Georges, F-67160 Rott (FR)
(74) Mandataire: Nuss, Laurent
(86) Numéro de dépôt international: PCT/FR1999/001717
(87) Numéro de publication internationale: WO 2001/004469

(56) Documents cités:
- EP-A- 0 916 426
- EP-A- 0 921 282
- WO-A-98/25714
- DE-A- 19 723 939

## Description

La présente invention concerne le domaine de l'industrie des équipements automobiles, plus particulièrement des dispositifs d'échappements, notamment des boîtes catalytiques, des boîtes catalytiques acoustiques ou des silencieux, et a pour objet un procédé de réalisation de boîtes catalytiques.

L'invention a également pour objet un dispositif pour la mise en oeuvre de ce procédé.

Les boîtes d'échappements catalytiques se présentent généralement sous forme d'un monolithe actif alvéolaire entouré par un matelas isolant et disposé dans un logement cylindrique de dimension correspondante, ce logement étant muni à ses extrémités, éventuellement avec interposition d'anneaux de maintien poreux correspondants, de parties tronconiques, éventuellement isolantes, de liaison à des tuyaux de raccordement correspondants.

Généralement, le monolithe actif alvéolaire, qui est constitué sous forme d'un ou plusieurs éléments cylindriques, est fixé au moyen de rubans adhésifs ou d'agrafes métalliques dans le matelas isolant et est éventuellement muni à ses extrémités des anneaux de maintien poreux correspondants, puis l'ensemble obtenu est monté dans un tube pré-débité, au moyen d'une machine d'enfilage indépendante poussant ledit ensemble dans ledit tube. Ce nouveau sous-ensemble est pourvu d'un gravage reproduisant les différentes caractéristiques de la boîte catalytique, puis les extrémités du tube pré-débité sont éventuellement munies intérieurement chacune d'une paroi concentrique tronconique, sur lesquelles lesdites extrémités sont déformées en troncs de cône par fluotournage ou par repoussage à chaud, après chauffage préalable de celles-ci par induction, pour réaliser des chambres périphériques isolantes ou non formant les parties de raccordement à des tuyaux correspondants.

Les anneaux de maintien poreux, qui peuvent être montés aux extrémités du monolithe actif, sont généralement réalisés en un tricot métallique. Les parois concentriques tronconiques qui peuvent être montées à l'intérieur du tube pré-débité, de part et d'autre du monolithe actif pourvu éventuellement des anneaux en tricot métallique, sont réalisées préalablement par fluotournage ou par emboutissage et sont disposées dans ledit tube prédécoupé avant les opérations de fluotournage ou de repoussage respectives des deux extrémités.

Les opérations de déformation par fluotournage ou repoussage de ces extrémités sont, actuellement, réalisées successivement et indépendamment, soit sur une même machine, avec retournement et remontage à la fin de la première opération, soit sur deux machines identiques montées en opposition ou côte-à-côte, le tube étant alors démonté de la première machine après la première opération pour être remonté par l'extrémité fluotournée dans la deuxième machine, en vue de l'exécution de la deuxième opération.

La ou les machines utilisées à cet effet sont avantageusement du type tour horizontal à commande numérique. Dans le cas d'une utilisation de deux machines montées en opposition, il suffit simplement de prévoir un moyen de transfert rectiligne de la pièce à usiner de la première vers la deuxième machine. En cas d'utilisation de deux machines disposées côte-à-côte, le dispositif de transfert correspondant est du type permettant un retournement de la pièce pendant son déplacement transversal d'une machine à l'autre.

Les parois concentriques tronconiques destinées à être éventuellement montées à l'intérieur du tube pré-débité en vue de la réalisation, par fluotournage ou repoussage des extrémités dudit tube pré-débité, des chambres périphériques isolantes formant les parties de raccordement à des tuyaux correspondants, sont avantageusement montées dans les extrémités correspondantes lors d'opérations intermédiaires, juste avant le fluotournage ou repoussage des extrémités correspondantes.

Ces procédés de réalisation de boîtes catalytiques connus permettent, certes, l'obtention de pièces techniquement correctes. Cependant, leur mise en oeuvre est relativement longue et complexe, faisant intervenir des postes de travail séparés, sur certains desquels des opérations sont effectuées entièrement manuellement, de sorte que le temps nécessaire à la fabrication de ces boîtes est relativement long, ce qui entraîne une augmentation considérable de leur prix de revient.

En outre, le temps d'opération est également allongé, du fait que le chauffage des extrémités du tube pré-débité, avant les opérations de fluotournage ou de repoussage, doit être effectué entièrement indépendamment de ces opérations, c'est-à-dire par mise en place préalable autour desdites extrémités des moyens de chauffage par induction, ces moyens devant être écartés pour permettre la mise en oeuvre des galets de déformation.

Par ailleurs, WO-A-9825714 décrit un procédé de réalisation de boîtes catalytiques, consistant en la réalisation d'un tube dans lequel est ensuite inséré un monolithe et à refermer ce tube de part et d'autre dudit monolithe. Ces opérations sont effectuées avec retournement de pièces.

Le mode de réalisation décrit dans ce document est relativement complexe et nécessite un nombre important d'opérations séparées d'assemblage.

La présente invention a pour but de pallier ces inconvénients en proposant un procédé et un dispositif de réalisation de boîtes catalytiques permettant de réaliser lesdites boîtes dans une suite d'opérations ininterrompue limitant l'intervention humaine à un minimum d'opérations.

A cet effet, le procédé de réalisation de boîtes catalytiques est caractérisé en ce qu'il consiste essentiellement, sur une ligne semi-automatique unique, à préparer au moins un monolithe, éventuellement avec des anneaux en tricot métallique d'extrémité, à entourer ledit monolithe d'un matelas isolant et à coller ledit matelas isolant sur ledit monolithe, à enfiler alors et à positionner le sous-ensemble obtenu, automatiquement, dans un tube pré-débité, à graver ledit tube de ses caractéristiques techniques, puis à le transférer dans un moyen spécifique de maintien, de serrage et d'entraînement en rotation, à introduire, éventuellement, dans chaque extrémité du tube pré-débité un cône d'isolation, à chauffer alors simultanément les extrémités dudit tube pré-débité, à déformer lesdites extrémités, après atteinte d'une température prédéterminée au moyen d'un dispositif de déformation à galets, avec maintien d'une température de formage, à extraire et à évacuer la boîte obtenue après l'opération de fluotournage ou de repoussage vers un dispositif de refroidissement en continu, la boîte étant réceptionnée, à la sortie de ce dispositif de refroidissement, dans un moyen d'accumulation avant stockage, conditionnement ou assemblage ultérieur.

L'invention a également pour objet un dispositif pour la mise en oeuvre de ce procédé, caractérisé en ce qu'il est essentiellement constitué par un poste de préparation d'au moins un monolithe, par un ensemble de montage et de positionnement dudit monolithe dans un tube pré-débité, par un poste de gravage du tube pré-débité, par un moyen spécifique de maintien, de serrage et d'entraînement en rotation, par des postes de distribution et de mise en place éventuelle des cônes d'isolation, par une installation de chauffage et de maintien en température des extrémités à déformer, par un dispositif de déformation à galets, par un moyen d'extraction et d'évacuation de la boîte obtenue après l'opération de fluotournage ou de repoussage, par un dispositif de refroidissement en continu, et par un moyen d'accumulation avant stockage, conditionnement ou assemblage ultérieur, l'ensemble de ces éléments étant reliés entre-eux par l'intermédiaire de dispositifs de transfert, en une ligne continue.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en plan d'un dispositif pour la mise en oeuvre du procédé conforme à l'invention ;
la figure 2 est une vue en élévation frontale, à plus grande échelle, du moyen spécifique de maintien, de serrage et d'entraînement en rotation du tube pré-débité en vue du fluotournage ou repoussage ;
la figure 3 est une vue agrandie de la figure 2, en élévation latérale et en coupe, du mandrin de serrage et d'entraînement du tube pré-débité ;
la figure 4 est une vue schématique en élévation frontale représentant les moyens de chauffage préalable et de maintien de température pendant le formage des extrémités du tube pré-débité, et
la figure 5 est une vue schématique en perspective expliquant l'opération de fluotournage ou repoussage bilatérale et simultanée.

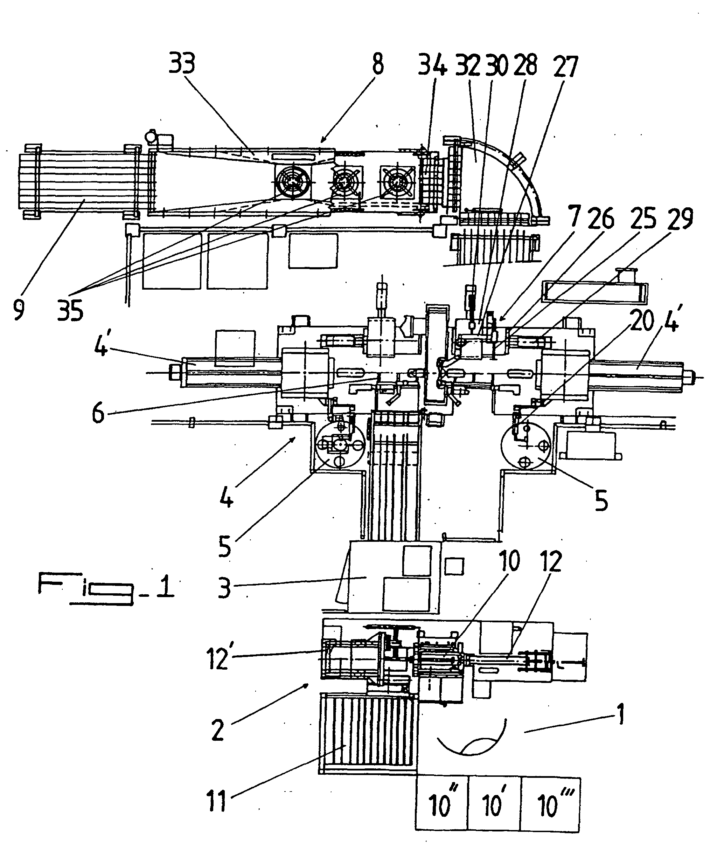

Conformément à l'invention, et comme le montre plus particulièrement, à titre d'exemple, la figure 1 des dessins annexés, le procédé de réalisation de boîtes catalytiques consiste essentiellement, sur une ligne semi-automatique unique, à préparer, dans un poste 1, au moins un monolithe, éventuellement avec des anneaux en tricot métallique d'extrémité, à entourer ledit monolithe d'un matelas isolant et à coller ledit matelas isolant sur ledit monolithe, à enfiler alors et à positionner le sous-ensemble obtenu, automatiquement, dans un tube pré-débité, dans un ensemble de montage et de positionnement 2. Ledit tube est alors gravé de ses caractéristiques techniques dans un poste de gravage 3, puis il est transféré dans un moyen spécifique 4 de maintien, de serrage et d'entraînement en rotation. Ensuite, un cône d'isolation est éventuellement introduit dans chaque extrémité du tube pré-débité au moyen de postes 5 de distribution et de mise en place de cônes d'isolation, puis les extrémités dudit tube pré-débité sont chauffées simultanément au moyen d'une installation 6 de chauffage et de maintien en température des extrémités à déformer.

Ensuite, après atteinte d'une température prédéterminée, les extrémités du tube pré-débité sont déformées, au moyen d'un dispositif de déformation à galets 7, avec maintien d'une température de formage par l'intermédiaire de l'installation 6. Après réalisation des extrémités par cette opération de fluotournage ou de repoussage, la boîte obtenue est extraite et évacuée vers un dispositif de refroidissement en continu 8, la boîte étant réceptionnée, à la sortie de ce dispositif de refroidissement 8, dans un moyen 9 d'accumulation avant stockage, conditionnement ou assemblage ultérieur.

Selon une caractéristique de l'invention, la préparation du monolithe dans le poste 1 est effectuée par disposition dudit monolithe, en un ou plusieurs éléments, éventuellement avec les anneaux d'extrémités en tricot métallique, dans une enrouleuse 10, le monolithe étant pourvu de son matelas isolant par introduction dudit matelas dans l'enrouleuse 10, ledit matelas étant préalablement muni, pendant son trajet d'insertion dans l'enrouleuse 10, d'un encollage permettant sa fixation définitive sur le monolithe, dans ladite enrouleuse 10, par rotation de cette dernière. Ainsi, il est possible de réaliser de manière particulièrement rapide et fiable le sous-ensemble monolithe actif - anneaux d'extrémité éventuels - matelas isolant, les opérations manuelles consistant simplement, d'une part, à placer le ou les éléments constitutifs du monolithe dans l'enrouleuse et à disposer éventuellement les anneaux d'extrémité contre des gabarits prévus à cet effet et, d'autre part, à introduire dans l'enrouleuse 10, après préparation du monolithe cylindrique, le matelas isolant, qui est automatiquement couvert d'un adhésif et appliqué ensuite de manière définitive sur la paroi extérieure du monolithe.

Ce poste 1 est constitué, outre par l'enrouleuse 10, par un magasin 10' de monolithes sous forme d'éléments cylindriques, par un magasin 10" de matelas isolants et par un magasin 10''' d'anneaux en tricot métallique. Ainsi, un opérateur placé devant l'enrouleuse 10 pourra servir cette dernière de manière parfaitement ergonomique, c'est-à-dire en ayant aisément accès à tous les éléments nécessaires à la préparation du sous-ensemble monolithe.

L'ensemble 2 de montage et de positionnement du monolithe dans un tube pré-débité est avantageusement constitué par un magasin 11 de tubes pré-débités, par un moyen 12 de déplacement et d'enfilage du monolithe dans le tube pré-débité et par un moyen 12' de maintien en butée dudit tube pré-débité et de transfert de ce dernier, après enfilage du monolithe, vers le poste de gravage 3 en aval, le positionnement du sous-ensemble comportant le monolithe dans le tube pré-débité étant vérifié par contrôle de là course du moyen 12 de déplacement et d'enfilage. De préférence, le moyen 12 de déplacement et d'enfilage du monolithe est avantageusement constitué sous forme d'un vérin hydraulique, pneumatique ou électrique, dont la course est contrôlée par l'intermédiaire de contacts de fin de course ou analogues, alors que le moyen 12' de maintien en butée du tube consiste en une simple butée d'appui dudit tube. La mise en place du tube pré-débité dans l'ensemble 2, en butée contre le moyen 12' de maintien en butée est effectuée manuellement par l'opérateur, de préférence en temps masqué, c'est-à-dire pendant la préparation du monolithe destiné à être monté dans ledit tube.

De manière connue, le poste de gravage 3 du tube pré-débité est constitué par un dispositif de marquage à outils coupants ou d'altération de surface du type fraise, à laser ou de percussion ou analogue et n'est pas décrit en détail.

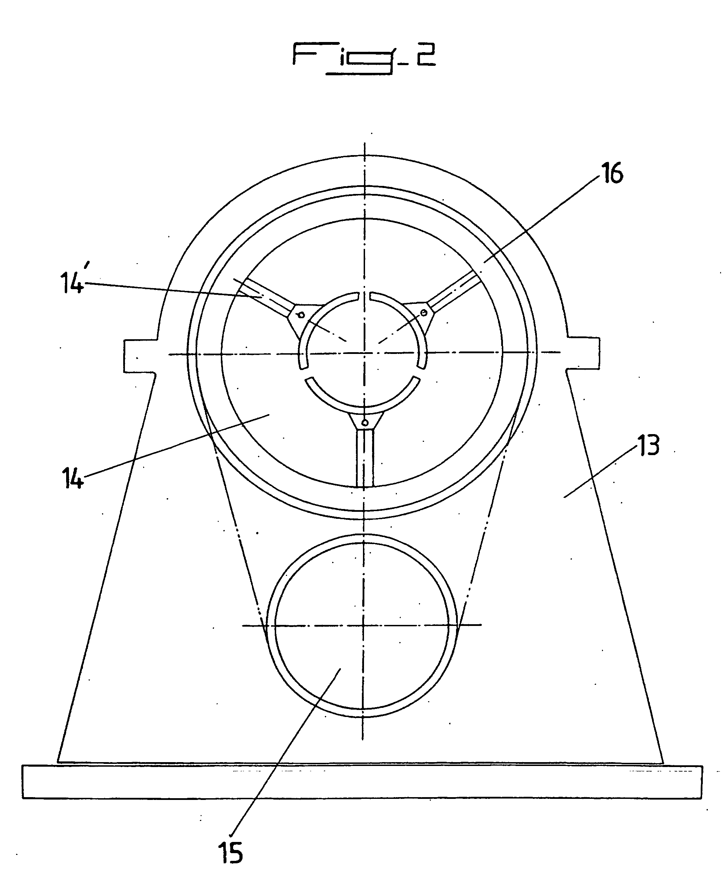

Le moyen spécifique 4 de maintien, de serrage et d'entraînement en rotation du tube pré-débité avec le sous-ensemble comportant le monolithe actif, représenté plus particulièrement à la figure 2 des dessins annexés, consiste en une lunette 13 formant bâti de support d'un mandrin 14 à accès bilatéral, entraîné en rotation par un moteur 15, également monté sur ledit bâti. Le mandrin 14 est avantageusement pourvu de mors 14' à serrage rapide commandés à distance et n'est pas décrit plus en détail.

Le moyen spécifique 4 de maintien, de serrage et d'entraînement en rotation du tube pré-débité est, en outre, complété par des butées automatiques de positionnement 4', disposées symétriquement de part et d'autre de la lunette 13 formant bâti de support du mandrin 14 à accès bilatéral et s'étendant dans l'axe dudit mandrin 14. Ces butées automatiques de positionnement 4' sont avantageusement constituées sous forme de vérins, dont la tige de piston est pourvue d'un plateau ou disque d'appui contre les extrémités correspondantes du tube pré-débité renfermant le sous-ensemble comportant le monolithe et dont la course est préalablement réglée au moyen de butées ou analogues. Ainsi, le positionnement correct du tube pré-débité avec le monolithe actif, après son insertion dans le mandrin 14, peut être simplement effectué, avant le serrage des mors de ce dernier, par actionnement simultané des deux butées automatiques de positionnement 4'. En effet, la course de ces butées étant préalablement réglée, chacune d'entre-elles ne déplacera le tube pré-débité que dans la limite préalablement impartie, de sorte qu'un centrage sera aisément garanti.

L'entraînement du mandrin 14 par le moteur 15 est préférentiellement réalisé par l'intermédiaire d'une chaîne de transmission, engrenant, d'une part, avec un disque denté solidaire de l'arbre du moteur 15 et, d'autre part, avec une couronne dentée 16 solidaire d'une face du mandrin 14.

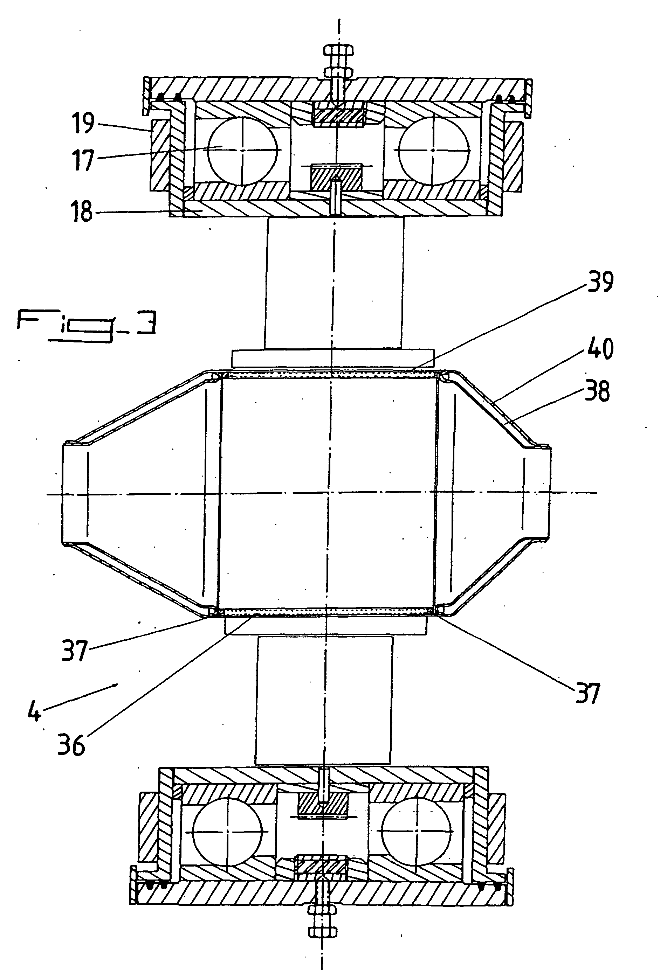

La figure 3 des dessins annexées représente en détail le guidage en rotation du mandrin 14 sur le bâti formé par la lunette 13 et qui consiste en un montage de l'ensemble dudit mandrin 14 dans un dispositif de roulement à billes ou à rouleaux 17, dont la cage intérieure 18 est mobile et est munie de flasques latéraux 19 de fixation de la couronne d'entraînement dentée 16.

Les postes 5 de distribution et de mise en place éventuelle des cônes d'isolation, dans les extrémités correspondantes du tube pré-débité consistent essentiellement en deux dispositifs de présentation desdits cônes dans une disposition verticale à un bras 20 de transfert et d'insertion dans lesdites extrémités du tube pré-débité, chaque dispositif de présentation étant pourvu d'un moyen d'alimentation par gravité ou par pression (non représenté), délivrant lesdits cônes individuellement. Un tel moyen d'alimentation peut, soit consister en un distributeur par gravité muni d'un moyen de retenue et de délivrance individuelle desdits cônes, soit être réalisé sous forme d'un distributeur chargé par ressort déplaçant les cônes verticalement jusqu'à une butée de maintien et de délivrance individuelle.

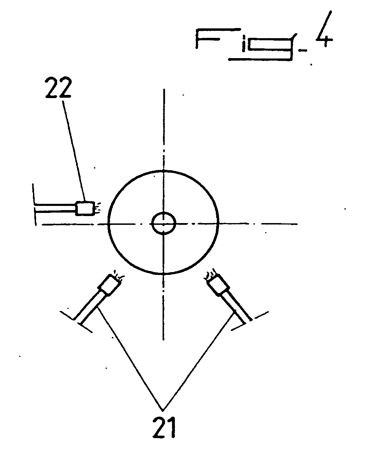

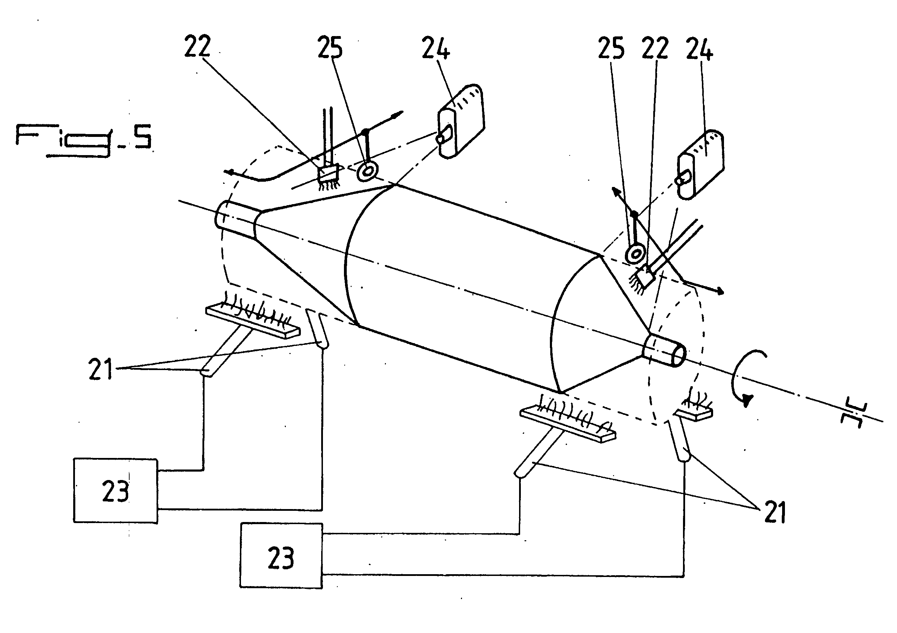

Le chauffage et le maintien en température des extrémités à déformer du tube pré-débité monté dans le mandrin 14 du moyen spécifique 4 de maintien, de serrage et d'entraînement en rotation est réalisé au moyen d'une installation 6 qui comporte, d'une part, au moins deux rampes 21 de brûleurs à gaz (figures 4 et 5), s'étendant chacune le long d'une génératrice des extrémités du tube pré-débité et, d'autre part, au moins un brûleur de formage 22 destiné à précéder le dispositif 7 de déformation à galets, afin de maintenir une température de formage constante. De préférence, les brûleurs de la rampe 21 et le brûleur de formage 22 affectés à chaque extrémité du tube pré-débité sont reliés à un dispositif de distribution 23 indépendant spécifique auxdites extrémités.

Conformément à une caractéristique de l'invention et comme le montre plus particulièrement la figure 5 des dessins annexés, l'installation 6 de chauffage et de maintien en température des extrémités à déformer du tube pré-débité peut être complétée par un moyen 24 de contrôle de la température desdites extrémités consistant en une lunette infrarouge ou un autre capteur de température, de type connu en soi. Un tel moyen 24 de contrôle permet de déclencher de manière automatique l'alimentation de la rampe 21 de brûleurs à gaz, dès que la température de formage recherchée est atteinte et de surveiller le maintien en température désirée, réalisé pendant le formage par le ou les brûleurs 22.

Le dispositif de déformation à galets 7 est avantageusement constitué, pour chaque extrémité du tube pré-débité, par deux galets 25 montés en opposition à hauteur de l'axe longitudinal dudit tube, chacun avec possibilité de déplacement suivant deux axes perpendiculaires, sur des tables de support 26. La figure 1 des dessins annexés ne représente, pour des raisons de clarté du dessin, qu'un seul galet 25 avec sa table 26. Chaque galet 25 est avantageusement monté sur un levier 27 et chaque table de support 26 est, de préférence, constituée par un support formant guide pour un coulisseau 28, déplacé sur ledit guide par un vérin 29 et portant le levier 27, qui est actionné en pivotement, avec son galet 25 par l'intermédiaire d'un autre vérin 30.

Ainsi, pour réaliser le formage d'une extrémité du tube pré-débité, il suffit de déplacer les galets 25 correspondants à l'endroit du tube formant jonction avec la partie à déformer, puis de déplacer chaque galet 25 en direction de l'extrémité libre du tube par l'intermédiaire du vérin 29 d'actionnement du coulisseau 28 de support de levier 27 portant ledit galet 25, ce déplacement devant être effectué simultanément avec un mouvement de pivotement du levier 27, sous l'action du vérin de commande 30 correspondant tendant à rapprocher le galet 25 de l'axe du tube pré-débité pendant le mouvement longitudinal, afin de conférer à ladite extrémité la conicité recherchée.

A l'issue du fluotournage ou repoussage des extrémités, la boîte obtenue est démontée du mandrin 14 constituant le moyen 4 de maintien, de serrage et d'entraînement en rotation par l'intermédiaire d'un moyen d'extraction et d'évacuation de ladite boîte, non représenté. Un tel moyen d'extraction peut, par exemple, être constitué par un mandrin ou une broche expansible monté de manière escamotable sur une potence et pouvant être affecté par l'intermédiaire de ladite potence d'un mouvement de translation latéralement à l'axe du mandrin 14, afin d'amener la boîte catalytique vers un moyen de transfert à rampes ou analogue 31 pourvu, éventuellement, d'un changeur de direction 32. Un tel changeur de direction 32 est notamment adapté pour aboutir à une réduction de l'ensemble de l'installation en permettant de disposer les postes de travail successifs, non pas en ligne l'un derrière l'autre, mais suivant des dispositions angulaires, de préférence à 90°, permettant de réduire l'encombrement total.

Le dispositif 8 de refroidissement en continu des boîtes catalytiques se présente avantageusement sous forme d'un tunnel 33 pourvu, dans sa partie inférieure, d'une bande transporteuse 34 et, dans sa partie supérieure, d'échangeurs de chaleur 35, de préférence avec ventilateurs de propulsion d'air. Ainsi, les boîtes traversant le dispositif de refroidissement 8 sont soumises pendant toute la traversée de ce dispositif à un courant d'air frais qui a pour conséquence d'amener la température de leurs extrémités fluotournées ou repoussées à une température sensiblement égale à la température ambiante du local dans lequel se trouve l'installation, de sorte que tout risque de brûlure accidentelle d'un opérateur, ainsi que toute gêne due à une chaleur excessive sont évités.

Le moyen 9 d'accumulation des boîtes avant le stockage, le conditionnement ou un assemblage ultérieur est relié directement à la sortie du dispositif de refroidissement 8 et consiste avantageusement en une rampe inclinée vers le bas à partir de ladite sortie, cette rampe pouvant être munie, de préférence, de rehausses arrière et latérales permettant une accumulation tampon relativement importante. Ainsi, il est possible à un opérateur de réaliser un transfert à un stockage intermédiaire, un conditionnement ou un assemblage ultérieur et, éventuellement le transfert d'un conditionnement, sans pour autant qu'il soit nécessaire d'arrêter l'installation, les boîtes catalytiques sortant en continu du dispositif de refroidissement 8 pouvant s'accumuler pendant un certain temps dans le moyen 9.

Enfin, les différents postes de travail de l'installation conforme à l'invention sont reliés entre eux par l'intermédiaire de dispositifs de transfert en ligne continu, qui ne sont pas décrits plus en détail et dont la constitution est facilement accessible à l'homme du métier.

Selon une autre caractéristique de l'invention, l'ensemble des dispositifs affectés au montage des tubes pré-débités, au montage éventuel des cônes isolants dans les extrémités de ces derniers, au chauffage desdites extrémités, à la déformation de ces dernières par fluotournage ou repoussage, au démontage et au transfert des boîtes obtenues, ainsi qu'à leur refroidissement sont avantageusement commandés et contrôlés par l'intermédiaire d'un dispositif de contrôle informatique, non représenté, et de circuits électroniques de transmission non représentés.

La figure 3 des dessins annexés représente, à titre d'exemple, une boîte catalytique obtenue par mise en oeuvre du procédé conforme à l'invention au moyen de l'installation suivant la figure 1, cette boîte étant encore serrée dans le mandrin 14 du moyen 4, après fluotournage ou repoussage des extrémités.

Comme il ressort de cette figure 3, cette boîte est constituée par un monolithe actif 36 délimité à ses extrémités par deux anneaux en tricot métallique 37 et enfermé dans un matelas isolant (non représenté). A chaque extrémité du monolithe, la boîte est pourvue intérieurement d'un cône isolant 38 délimitant, avec les extrémités d'un tube pré-débité 39, logeant sensiblement dans sa partie centrale le monolithe actif 36 et les anneaux 37, après fluotournage ou repoussage desdites extrémités, des chambres isolantes coniques 40.

Grâce à l'invention, il est possible de réaliser en une suite d'opérations continue, de manière semi-automatique, des boîtes catalytiques, ce avec une augmentation substantielle du rendement entraînant une économie correspondante en frais de main-d'oeuvre, tout en assurant une meilleure qualité du produit obtenu. Il en résulte que le coût de fabrication des boîtes catalytiques peut être notablement réduit.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de réalisation de boîtes catalytiques consistant essentiellement, sur une ligne semi-automatique unique, à préparer, dans un poste (1), au moins un monolithe (36), éventuellement avec des anneaux en tricot métallique d'extrémité, à entourer ledit monolithe (36) d'un matelas isolant et à coller ledit matelas isolant sur ledit monolithe (36), à enfiler alors et à positionner le sous-ensemble obtenu, automatiquement, dans un tube pré-débité (39), dans un ensemble de montage et de positionnement (2), à graver ledit tube de ses caractéristiques techniques dans un poste de gravage (3), puis à le transférer dans un moyen spécifique (4) de maintien, de serrage et d'entraînement en rotation, à introduire, éventuellement, dans chaque extrémité du tube pré-débité (39) un cône d'isolation (38) au moyen de postes (5) de distribution et de mise en place de cônes d'isolation, à chauffer alors simultanément les extrémités dudit tube pré-débité (39) au moyen d'une installation (6) de chauffage et de maintien en température des extrémités à déformer, à déformer par fluotournage ou par repoussage lesdites extrémités, après atteinte d'une température prédéterminée au moyen d'un dispositif de déformation à galets (7), avec maintien d'une température de formage, à extraire et à évacuer la boîte obtenue après déformation vers un dispositif de refroidissement en continu (8), la boîte étant réceptionnée, à la sortie de ce dispositif de refroidissement (8), dans un moyen (9) d'accumulation avant stockage, conditionnement ou assemblage ultérieur.

2. Procédé, suivant la revendication 1, **caractérisé en ce que** la préparation du monolithe (36) dans le poste (1) est effectuée par disposition dudit monolithe (36), en un ou plusieurs éléments, éventuellement avec les anneaux d'extrémités en tricot métallique, dans une enrouleuse (10), le monolithe (36) étant pourvu de son matelas isolant par introduction dudit matelas dans l'enrouleuse (10), ledit matelas étant préalablement muni, pendant son trajet d'insertion dans l'enrouleuse (10), d'un encollage permettant sa fixation définitive sur le monolithe (36), dans ladite enrouleuse (10), par rotation de cette dernière.

3. Dispositif pour la mise en oeuvre du procédé suivant l'une quelconque des revendications 1 et 2, essentiellement constitué par un poste (1) de préparation d'au moins un monolithe (36), par un ensemble (2) de montage et de positionnement dudit monolithe (36) dans un tube pré-débité (39), par un poste (3) de gravage du tube pré-débité, par un moyen spécifique (4) de maintien, de serrage et d'entraînement en rotation, par des postes (5) de distribution et de mise en place éventuelle des cônes d'isolation (38), par une installation (6) de chauffage et de maintien en température des extrémités dudit tube pré-débité (39) à déformer, par un dispositif (7) de déformation à galets, par un moyen d'extraction et d'évacuation de la boîte obtenue après l'opération de fluotournage ou de repoussage, par un dispositif (8) de refroidissement en continu, et par un moyen (9) d'accumulation avant stockage, conditionnement ou assemblage ultérieur, l'ensemble de ces éléments étant reliés entre-eux par l'intermédiaire de dispositifs de transfert, en une ligne continue.

4. Dispositif, suivant la revendication 3, **caractérisé en ce que** le poste (1) de préparation d'un monolithe (36) est constitué par une enrouleuse (10), par un magasin (10') de monolithes sous forme d'éléments cylindriques, par un magasin (10") de matelas isolants et par un magasin (10''') d'anneaux en tricot métallique.

5. Dispositif, suivant la revendication 3, **caractérisé en ce que** l'ensemble (2) de montage et de positionnement du monolithe (36) dans un tube pré-débité (39), est constitué par un magasin (11) de tubes pré-débités, par un moyen (12) de déplacement et d'enfilage du monolithe (36) dans le tube pré-débité (39) et par un moyen (12') de maintien en butée dudit tube pré-débité (39) et de transfert de ce dernier, après enfilage du monolithe, vers le poste de gravage (3) en aval, le positionnement du sous-ensemble comportant le monolithe (36) dans le tube pré-débité (39) étant vérifié par contrôle de la course du moyen (12) de déplacement et d'enfilage.

6. Dispositif, suivant la revendication 5, **caractérisé en ce que** le moyen (12) de déplacement et d'insertion du monolithe (36) est constitué sous forme d'un vérin hydraulique, pneumatique ou électrique, dont la course est contrôlée par l'intermédiaire de contacts de fin de course ou analogues, alors que le moyen (12') de maintien en butée du tube consiste en une simple butée d'appui dudit tube.

7. Dispositif, suivant la revendication 3, **caractérisé en ce que** le poste de gravage (4) du tube pré-débité (39) est constitué par un dispositif de marquage à outils coupants ou d'altération de surface du type fraise, à laser ou de percussion ou analogue.

8. Dispositif, suivant la revendication 3, **caractérisé en ce que** le moyen spécifique (4) de maintien, de serrage et d'entraînement en rotation du tube pré-débité (39) avec le sous-ensemble comportant le monolithe actif (36) consiste en une lunette (13) formant bâti de support d'un mandrin (14) à accès bilatéral, entraîné en rotation par un moteur (15), également monté sur ledit bâti.

9. Dispositif, suivant la revendication 8, **caractérisé en ce que** le mandrin (14) est pourvu de mors (14') à serrage rapide commandés à distance.

10. Dispositif, suivant la revendication 8, **caractérisé en ce que** le moyen spécifique (4) de maintien, de serrage et d'entraînement en rotation du tube pré-débité (39) est, en outre, complété par des butées automatiques de positionnement (4'), disposées symétriquement de part et d'autre de la lunette (13) formant bâti de support du mandrin (14) à accès bilatéral et s'étendant dans l'axe dudit mandrin (14).

11. Dispositif, suivant la revendication 10, **caractérisé en ce que** les butées automatiques de positionnement (4') sont constituées sous forme de vérins, dont la tige de piston est pourvue d'un plateau ou disque d'appui contre les extrémités correspondantes du tube pré-débité (39) renfermant le sous-ensemble comportant le monolithe actif (36) et dont la course est préalablement réglée au moyen de butées ou analogues.

12. Dispositif, suivant la revendication 3, **caractérisé en ce que** les postes (5) de distribution et de mise en place éventuelle des cônes d'isolation (38), dans les extrémités correspondantes du tube pré-débité (39) consistent essentiellement en deux dispositifs de présentation desdits cônes dans une disposition verticale à un bras (20) de transfert et d'insertion dans lesdites extrémités du tube pré-débité (39), chaque dispositif de présentation étant pourvu d'un moyen d'alimentation par gravité ou par pression délivrant lesdits cônes individuellement.

13. Dispositif, suivant la revendication 12, **caractérisé en ce que** le moyen d'alimentation est, soit un distributeur par gravité muni d'un moyen de retenue et de délivrance individuelle desdits cônes, soit sous forme d'un distributeur chargé par ressort déplaçant les cônes verticalement jusqu'à une butée de maintien et de délivrance individuelle.

14. Dispositif, suivant la revendication 3, **caractérisé en ce que** l'installation (6) de chauffage et de maintien en température des extrémités à déformer du tube pré-débité (39) monté dans le mandrin (14) du moyen spécifique (4) de maintien, de serrage et d'entraînement en rotation comporte, d'une part, au moins deux rampes (21) de brûleurs à gaz s'étendant chacune le long d'une génératrice des extrémités du tube pré-débité et, d'autre part, au moins un brûleur de formage (22) destiné à précéder le dispositif (7) de déformation à galets, afin de maintenir une température de formage constante.

15. Dispositif, suivant la revendication 14, **caractérisé en ce que** les brûleurs de la rampe (21) et le brûleur de formage (22) affectés à chaque extrémité du tube pré-débité (39) sont reliés à un dispositif de distribution (23) indépendant spécifique auxdites extrémités.

16. Dispositif, suivant la revendication 14, **caractérisé en ce que** l'installation (6) de chauffage et de maintien en température des extrémités à déformer du tube pré-débité (39) est complétée par un moyen (24) de contrôle de la température desdites extrémités consistant en une lunette infrarouge ou un autre capteur de température.

17. Dispositif, suivant la revendication 3, **caractérisé en ce que** le dispositif de déformation à galets (7) est constitué, pour chaque extrémité du tube pré-débité, par deux galets (25) montés en opposition à hauteur de l'axe longitudinal dudit tube, chacun avec possibilité de déplacement suivant deux axes perpendiculaires, sur des tables de support (26).

18. Dispositif, suivant la revendication 17, **caractérisé en ce que** chaque galet (25) est monté sur un levier (27) et chaque table de support (26) est constituée par un support formant guide pour un coulisseau (28), déplacé sur ledit guide par un vérin (29) et portant le levier (27,) qui est actionné en pivotement, avec son galet (25), par l'intermédiaire d'un autre vérin (30).

19. Dispositif, suivant la revendication 3, **caractérisé en ce que** le moyen d'extraction est constitué par un mandrin ou une broche expansible monté de manière escamotable sur une potence et pouvant être affecté par l'intermédiaire de ladite potence d'un mouvement de translation latéralement à l'axe du mandrin (14), afin d'amener la boîte catalytique vers un moyen de transfert à rampes ou analogue (31) pourvu, éventuellement, d'un changeur de direction (32).

20. Dispositif, suivant la revendication 3, **caractérisé en ce que** le dispositif (8) de refroidissement en continu des boîtes catalytiques se présente sous forme d'un tunnel (33) pourvu, dans sa partie inférieure, d'une bande transporteuse (34) et, dans sa partie supérieure, d'échangeurs de chaleur (35), de préférence avec ventilateurs de propulsion d'air.

21. Dispositif, suivant la revendication 3, **caractérisé en ce que** le moyen (9) d'accumulation des boîtes catalytiques avant le stockage, le conditionnement ou un assemblage ultérieur est relié directement à la sortie du dispositif de refroidissement (8) et consiste en une rampe inclinée vers le bas à partir de ladite sortie, cette rampe étant munie de rehausses arrière et latérales permettant une accumulation tampon relativement importante.

22. Dispositif, suivant l'une quelconque des revendications 3 à 21, **caractérisé en ce que** les différents postes de travail sont reliés entre eux par l'intermédiaire de dispositifs de transfert en ligne continu.

23. Dispositif, suivant l'une quelconque des revendications 3 à 21, **caractérisé en ce que** l'ensemble des dispositifs affectés au montage des tubes pré-débités, au montage éventuel des cônes isolants dans les extrémités de ces derniers, au chauffage desdites extrémités, à la déformation de ces dernières par fluotournage ou repoussage, au démontage et au transfert des boîtes obtenues, ainsi qu'à leur refroidissement sont commandés et contrôlés par l'intermédiaire d'un dispositif de contrôle informatique et de circuits électroniques de transmission.

## Patentansprüche

1. Verfahren zur Herstellung von Katalysatorgehäusen, das bei Verwendung einer einzigen halbautomatischen Fertigungslinie im wesentlichen darin besteht, an einem Arbeitsplatz (1) mindestens einen am Ende gegebenenfalls mit Ringen aus Metallgeflecht versehenen Monolithen (36) vorzubereiten, den genannten Monolithen (36) mit einer Isoliermatte zu umgeben und die genannte Isoliermatte auf den genannten Monolithen (36) aufzukleben, anschließend die erhaltene Untereinheit automatisch in ein vorher zugeschnittenes Rohr (39) in einer Montage- und Positioniereinheit (2) einzuschieben und zu positionieren, das genannte Rohr an einem Gravierarbeitsplatz (3) mit einer Gravur seiner technischen Eigenschaften zu versehen und anschließend an eine dafür vorgesehene Halterungs-, Klemm- und Rotationsantriebsvorrichtung (4) zu übergeben, gegebenenfalls an Arbeitsplätzen (5) für die Verteilung und Anbringung von Isolierkonen in jedes Ende des vorher zugeschnittenen Rohrs (39) einen Isolierkonus (38) einzuführen, daraufhin gleichzeitig die Enden des genannten vorher zugeschnittenen Rohrs (39) mittels einer Aufheiz- und Temperaturhaltevorrichtung (6) für die zu verformenden Enden zu erhitzen, durch Drückwalzen oder durch Flachprägen der genannten Enden nach Erreichen einer vorbestimmten Temperatur mittels einer Rollenverformungsvorrichtung (7) unter Aufrechterhaltung einer Verformungstemperatur zu verformen, das nach Verformung erhaltene Katalysatorgehäuse herauszunehmen und einer kontinuierlichen Kühlvorrichtung (8) zuzuführen, wobei das Katalysatorgehäuse vor der Einlagerung, der Verpackung oder der weiteren Montage am Ausgang der Kühlvorrichtung (8) in einer Sammeleinrichtung (9) aufgenommen wird.

2. Verfahren nach Anspruch 1, **dadurch gekennzeichnet, dass** die Vorbereitung des Monolithen (36) am Arbeitsplatz (1) **dadurch** erfolgt, dass der genannte aus einem oder mehreren Elementen bestehende, eventuell mit Endringen aus Metallgeflecht versehene Monolith (36) in eine Wickelvorrichtung (10) eingelegt wird, wobei der Monolith (36) durch Einführen der genannten Matte in die Wickelvorrichtung (10) mit seiner Isoliermatte versehen wird, und wobei die genannte Matte vorher während des Einschiebens in die Wickelvorrichtung (10) mit einer Verleimung versehen wird, die deren endgültige Fixierung an dem Monolithen (36) in der genannten Wickelvorrichtung (10) durch Drehen der letzteren ermöglicht.

3. Vorrichtung zur Durchführung des Verfahrens nach einem der Ansprüche 1 und 2, im wesentlichen bestehend aus einem Arbeitsplatz (1) zur Vorbereitung mindestens eines Monolithen (36), aus einer Montage- und Positioniereinheit (2) des genannten Monolithen (36) in dem vorher zugeschnittenen Rohr (39), aus einem Arbeitsplatz (3) zum Gravieren des vorher zugeschnittenen Rohrs, aus einer spezifische Halterungs-, Klemm- und Rotationsantriebsvorrichtung (4), aus Arbeitsplätzen (5) für die Verteilung und die eventuelle Anbringung von Isolierkonen (38), durch eine Aufheiz- und Temperaturhaltevorrichtung (6) für die zu verformenden Enden des vorher zugeschnittenen Rohres (39), aus einer Rollenverformungsvorrichtung (7), aus einem Mittel zur Abnahme und zum Herausnehmen des nach Drückwalzen und Flachprägen erhaltenen Katalysatorgehäuses, aus einer kontinuierlichen Kühlvorrichtung (8) und aus einer Sammeleinrichtung (9) vor der Einlagerung, der Verpackung oder der weiteren Montage, wobei die Gesamtheit dieser Elemente untereinander durch Transfervorrichtungen in einer kontinuierlichen Fertigungslinie verbunden sind.

4. Vorrichtung nach Anspruch 3, **dadurch gekennzeichnet, dass** der Arbeitsplatz (1) für die Vorbereitung eines Monolithen (36) aus einer Wickelvorrichtung (10), aus einem Magazin (10') für Monolithen in Form von zylindrischen Elementen, aus einem Magazin (10") für Isoliermatten und einem Magazin (10''') für Metallgeflechtringe besteht.

5. Vorrichtung nach Anspruch 3, **dadurch gekennzeichnet, dass** die Einheit (2) für die Montage und Positionierung des Monolithen (36) in einem vorher zugeschnittenen Rohr (39) aus einem Magazin (11) für die vorher zugeschnittenen Rohre, aus einer Vorrichtung (12) zum Bewegen und Einschieben des Monolithen (36) in das vorher zugeschnittene Rohr (39) und aus einer Vorrichtung (12') zum Festhalten am Anschlag des genannten vorher zugeschnittenen Rohres (39) und zur Übertragung des letzteren nach Einschieben des Monolithen zu dem stromab gelegenen Gravierplatz (3) besteht, wobei die Positionierung der den Monolithen (36) enthaltenden Untereinheit im vorher zugeschnittenen Rohr (39) durch Kontrolle des Hubs der Vorrichtung (12) für das Bewegen und das Einschieben überprüft wird.

6. Vorrichtung nach Anspruch 5, **dadurch gekennzeichnet, dass** die Einrichtung (12) zum Bewegen und Einschieben des Monolithen (36) in Form eines hydraulischen, pneumatischen oder elektrischen Presstopfes ausgebildet ist, dessen Hub durch Hubendkontakte oder analoge Mittel gesteuert wird, während die Einrichtung (12') zum Festhalten des Rohrs am Anschlag aus einem einfachen Stützanschlag des genannten Rohrs besteht.

7. Vorrichtung nach Anspruch 3, **dadurch gekennzeichnet, dass** der Gravierplatz (4) für das vorher zugeschnittene Rohr (3) aus einer Markierungsvorrichtung mit Schneidwerkzeugen oder Werkzeugen zur Veränderung der Oberfläche vom Typ Fräsvorrichtung, Laservorrichtung, Schlagvorrichtung oder analogen Vorrichtungen besteht.

8. Vorrichtung nach Anspruch 3, **dadurch gekennzeichnet, dass** die spezifische Halte-, Klemm- und Rotationsantriebsvorrichtung (4) für das vorher zugeschnittene Rohr (39) mit der den aktiven Monolithen (36) enthaltenden Untereinheit aus einer Lünette (13) besteht, die ein Stützgestell für eine Muffe (14) mit beidseitigem Zugang bildet, die durch einen ebenfalls auf dem genannten Gestell montierten Motor (15) in Rotation gesetzt wird.

9. Vorrichtung nach Anspruch 8, **dadurch gekennzeichnet, dass** die Muffe (14) mit ferngesteuerten Klemmbacken (14') mit schneller Schließung versehen ist.

10. Vorrichtung nach Anspruch 8, **dadurch gekennzeichnet, dass** die spezifische Halte-, Klemm- und Rotationsantriebsvorrichtung (4) des vorher zugeschnittenen Rohres (39) außerdem ergänzt ist durch automatische Positionieranschläge (4'), die symmetrisch beiderseits der ein Stützgestell einer Muffe (14) mit beidseitigem Zugang bildenden und sich in der Achse der genannten Muffe (14) erstreckenden Lünette (13) angeordnet sind.

11. Vorrichtung nach Anspruch 10, **dadurch gekennzeichnet, dass** die automatischen Positionieranschläge (4') in Form von Presstöpfen ausgebildet sind, deren Kolbenstange mit einer sich gegen die entsprechenden Enden des vorher zugeschnittenen Rohres (39), welches die den aktiven Monolithen (36) enthaltende Untereinheit umschließt, abstützenden Platte oder Scheibe versehen ist, und deren Hub vorher mittels Anschlägen oder analogen Vorrichtungen geregelt ist.

12. Vorrichtung nach Anspruch 3, **dadurch gekennzeichnet, dass** die Arbeitsplätze (5) zur Verteilung und eventuellen Anbringung von Isolierkonen (38) in den entsprechenden Enden des vorher zugeschnittenen Rohres (39) im wesentlichen aus zwei Vorrichtungen zur Heranführung der genannten Konen zu einer vertikalen Anordnung mit einem Arm (20) für den Transfer und das Einschieben in die genannten Enden des vorher zugeschnittenen Rohres (39) bestehen, wobei jede Zuführvorrichtung mit einer durch Schwerkraft oder Druck wirkenden Versorgungsvorrichtung versehen ist, die die genannten Konen einzeln zuführt.

13. Vorrichtung nach Anspruch 12, **dadurch gekennzeichnet, dass** die Zuführvorrichtung entweder ein durch Schwerkraft wirkender Verteiler ist, welcher mit einer Rückhalte- und Freigabevorrichtung für einzelne Konen versehen ist, oder ein mit einer Feder beaufschlagter Verteiler ist, womit die Konen vertikal bis zu einem Anschlag für das individuelle Festhalten und Freigeben verschoben werden.

14. Vorrichtung nach Anspruch 3, **dadurch gekennzeichnet, dass** die Aufheiz- und Temperaturhaltevorrichtung (6) für die zu verformenden Enden des vorher zugeschnittenen Rohres (39), welches in der Muffe (14) der spezifischen Halte-, Klemm- und Rotationsantriebsvorrichtung (4) montiert ist, einerseits mindestens zwei Gas-Rampenbrenner (21), die sich jeweils längs einer Mantellinie der Enden des vorher zugeschnittenen Rohres erstrecken, und andererseits mindestens einen Verformungsbrenner (22) aufweist, der vor der Rollenverformungsvorrichtung (7) angeordnet ist, um eine konstante Verformungstemperatur zu halten.

15. Vorrichtung nach Anspruch 14, **dadurch gekennzeichnet, dass** die Rampenbrenner (21) und der Verformungsbrenner (22), die jedem Ende des vorher zugeschnittenen Rohres (39) zugeordnet sind, mit einer unabhängigen spezifischen Verteilungsvorrichtung (23) für die genannten Enden verbunden sind.

16. Vorrichtung nach Anspruch 14, **dadurch gekennzeichnet, dass** die Aufheiz- und Temperaturhaltevorrichtung (6) für die zu verformenden Enden des vorher zugeschnittenen Rohres (39) ergänzt wird durch ein Mittel (24) für die Kontrolle der Temperatur der genannten Enden, das aus einer Infrarotlinse oder einem sonstigen Temperatursensor besteht.

17. Vorrichtung nach Anspruch 3, **dadurch gekennzeichnet, dass** die Rollenverformungsvorrichtung (7) an jedem Ende des vorher zugeschnittenen Rohres (39) aus zwei einander gegenüberliegenden, auf der Höhe der Längsachse des genannten Rohrs auf den Tragplatten (26) montierten Rollen (25) besteht, wobei jeweils die Möglichkeit der Bewegung nach zwei zueinander senkrechten Achsen besteht.

18. Vorrichtung nach Anspruch 17, **dadurch gekennzeichnet, dass** jede Rolle (25) an einem Hebel (27) montiert ist und jede Tragplatte (26) aus einem Träger besteht, der eine Führung für eine Gleitplatte (28) bildet, die auf der genannten Führung durch einen Presstopf (29) positioniert wird und den Hebel (27) trägt, welcher mit seiner Rolle (25) über einen weiteren Presstopf (30) geschwenkt wird.

19. Vorrichtung nach Anspruch 3, **dadurch gekennzeichnet, dass** das Entnahmemittel aus einer Muffe oder einer ausfahrbaren Spindel besteht, die in klappbarer Form auf einem Galgen montiert ist, und mittels des genannten Galgens mit einer Translationsbewegung seitlich zur Achse der Muffe (14) beaufschlagt werden kann, um das Katalysatorgehäuse einer gegebenenfalls mit einer Richtungsänderungsvorrichtung (32) versehenen Transfervorrichtung (31) mit Rampen oder sonstigen Vorrichtungen zuführen zu können.

20. Vorrichtung nach Anspruch 3, **dadurch gekennzeichnet, dass** die kontinuierliche Kühlvorrichtung (8) für die Katalysatorgehäuse sich in Form eines Tunnels (33) darstellt, welcher an seinem unteren Teil mit einem Förderband (34) und an seinem oberen Teil mit Wärmetauschern (35), vorzugsweise mit Luftförderungsventilatoren, versehen ist.

21. Vorrichtung nach Anspruch 3, **dadurch gekennzeichnet, dass** die Sammeleinrichtung (9) der Katalysatorgehäuse vor der Einlagerung, der Verpackung oder der weiteren Montage direkt mit dem Ausgang der Kühlvorrichtung (8) verbunden ist und aus einer ab dem genannten Ausgang nach unten geneigten Rampe besteht, wobei die genannte Rampe mit hinteren und seitlichen Anhebungen versehen ist, welche das Ansammeln eines relativ bedeutenden Pufferbestandes ermöglicht.

22. Vorrichtung nach einem der Ansprüche 3 bis 21, **dadurch gekennzeichnet, dass** die verschiedenen Arbeitsplätze untereinander durch Transfervorrichtungen in kontinuierlicher Linie verbunden sind.

23. Vorrichtung nach einem der Ansprüche 3 bis 21, **dadurch gekennzeichnet, dass** die Gesamtheit der Vorrichtungen, die für die Montage der vorher zugeschnittenen Rohre, für die eventuelle Montage der Isolierkonen in den Enden der letzteren, für das Erhitzen der genannten Enden, für die Verformung der letzteren durch Drückwalzen oder durch Flachprägen, für die Demontage und den Transfer der erhaltenen Katalysatorgehäuse sowie für ihre Kühlung vorgesehen sind, mittels einer Computersteuerungsvorrichtung und mittels elektronischer Übertragungsschaltkreise gesteuert und überwacht werden.

## Claims

1. Method for producing catalyst containers consisting substantially, on a single semiautomatic line, in preparing, in a station (1), at least one monolithic body (36), optionally with metal mesh end rings, in surrounding said monolithic body (36) with an insulating mat and gluing said insulating mat to said monolithic body (36), and then inserting and positioning the obtained subassembly, automatically, in a pre-cut tube (39), in a mounting and positioning assembly (2), in marking said tube with its technical characteristics in a marking station (3), then in transferring into a specific means (4) for holding, gripping and driving in rotation, in optionally introducing an insulating cone (38) into each end of the pre-cut tube (39) by means of stations (5) for the distribution and placement of insulating cones, and then simultaneously heating the ends of said pre-cut tube (39) by means of an installation (6) for heating and maintaining at temperature the ends to be deformed, in deforming said ends by flow turning or pressing, after reaching a predetermined temperature, by means of a roller deformation device (7), a forming temperature being maintained, in withdrawing and discharging the obtained container after deformation toward a continuous cooling device (8), the container being received, at the outlet of this cooling device (8), in a means (9) for accumulation before subsequent storage, packaging or assembly.

2. Method according to claim 1, **characterised in that** the preparation of the monolithic body (36) in the station (1) is carried out by arrangement of said monolithic body (36), in one or more elements, optionally with metal mesh end rings, in a winder (10), the monolithic body (36) being provided with its insulating mat by introduction of said mat into the winder (10), said mat being first provided, during its insertion movement into the winder (10), with glue permitting its final fixing on the monolithic body (36), in said winder (10), by rotation thereof.

3. Device for carrying out the method according to any one of claims 1 and 2, substantially comprising a station (1) for preparing at least one monolithic body (36), an assembly (2) for mounting and positioning said monolithic body (36) in a pre-cut tube, a station (3) for marking the pre-cut tube (39), a specific means (4) for holding, gripping and driving in rotation, stations (5) for optional distribution and placement of insulating cones (38), an installation (6) for heating and maintaining at temperature the ends of said pre-cut tube (39) to be deformed, a roller deformation device (7), means for extracting and discharging the container obtained after the operation of flow turning or pressing, a continuous cooling device (8) and means (9) for accumulation before subsequent storage, packaging or assembly, all of these elements being interconnected by means of transfer devices, in a continuous line.

4. Device according to claim 3, **characterised in that** the station (1) for preparing a monolithic body comprises a roller (10), a store (10') of monolithic bodies in the form of cylindrical elements, a store (10") of insulating mats and a store (10''') of metal mesh rings.

5. Device according to claim 3, **characterised in that** the assembly (2) for mounting and positioning the monolithic body (36) in a pre-cut tube (39) comprises a store (11) of pre-cut tubes, a means (12) for moving and inserting the monolithic body (36) into the pre-cut tube (39) and a means (12') for holding in abutment said pre-cut tube and for transferring said tube, after insertion of the monolithic body, toward the marking station (3) downstream, the positioning of the subassembly comprising the monolithic body (36) in the pre-cut tube (39) being verified by monitoring the movement of the displacement and insertion means (12).

6. Device according to claim 5, **characterised in that** the means (12) for moving and inserting the monolithic body (36) comprises a hydraulic, pneumatic or electric cylinder, the path of which is controlled by means of end-of-travel contacts or the like, whilst the means (12') for holding the tube in abutment consists of a simple stop for supporting said tube.

7. Device according to claim 3, **characterised in that** the marking station (4) of the pre-cut tube (39) comprises a marking device with tools for cutting or altering the surface, of the laser or percussion type or the like.

8. Device according to claim 3, **characterised in that** the specific means (4) for holding, gripping and driving in rotation the pre-cut tube (39) with the subassembly comprising the active monolithic body (36), consists of a carrier (13) forming a support frame for a mandrel (14) with access from both sides, driven in rotation by a motor (15) also mounted on said frame.

9. Device according to claim 8, **characterised in that** the mandrel (14) is provided with remotely controlled jaws (14') for rapid gripping.

10. Device according to claim 8, **characterised in that** the specific means (4) for holding, gripping and driving in rotation the pre-cut tube (39) is also supplemented by automatic positioning stops (4'), disposed symmetrically either side of the carrier (13) forming the support frame for the mandrel (14) with access from both sides, and extending along the axis of said mandrel (14).

11. Device according to claim 10, **characterised in that** the automatic positioning stops (4') are constituted in the form of cylinders, the piston rod of which is provided with a plate or disc bearing against the corresponding ends of the pre-cut tube (39) enclosing the subassembly comprising the active monolithic body (36) and the path of which is previously adjusted by means of stops or the like.

12. Device according to claim 3, **characterised in that** the stations (5) for the optional distribution and placement of insulating cones (38), in the corresponding ends of the pre-cut tube (39), substantially comprise two devices for presenting said cones in a vertical arrangement, with an arm (20) for transfer and insertion into said ends of the pre-cut tube (39), each presentation device being provided with gravity or pressure supply means delivering said cones individually.

13. Device according to claim 12, **characterised in that** the supply means is either a gravity distributor provided with individual holding and delivery means for said cones, or in the form of a spring-loaded distributor vertically displacing the cones to an individual holding and delivery stop.

14. Device according to claim 3, **characterised in that** the installation (6) for heating and maintaining at temperature the ends to be deformed of the pre-cut tube (39) mounted in the mandrel (14) of the specific means (4) for holding, gripping and driving in rotation, comprises, on the one hand, at least two rows (21) of gas burners, each extending along a generatrix of the ends of the pre-cut tube and, on the other hand, at least one forming burner (22) intended to precede the roller deformation device (7), so as to maintain a constant forming temperature.

15. Device according to claim 14, **characterised in that** the burners of the row (21) and the forming burner (22) associated with each end of the pre-cut tube (39) are connected to an independent distribution device (23) specific to said ends.

16. Device according to claim 14, **characterised in that** the installation (6) for heating and maintaining at temperature the ends to be deformed of the pre-cut tube (39) is supplemented by a means (24) for controlling the temperature of said ends, consisting of an infrared cell or another temperature sensor.

17. Device according to claim 3, **characterised in that** the roller deformation device (7) comprises, for each end of the pre-cut tube, two rollers (25) mounted in opposition to each other at the height of the longitudinal axis of said tube, each with the possibility of displacement along two perpendicular axes, on support tables (26).

18. Device according to claim 17, **characterised in that** each roller (25) is mounted on a lever (27) and each support table (26) comprises a support forming a guide for a slide (28), displaced over said guide by a cylinder (29) and carrying the lever (27) which is actuated to pivot, with its roller (25), by means of another cylinder (30).

19. Device according to claim 3, **characterised in that** the extraction means comprises a mandrel or an expansible chuck mounted retractably on a brace and capable of being acted on, via said support, by a translatory movement laterally to the axis of the mandrel (14), so as to bring the catalyst container toward a transfer means with ramps or the like (31), optionally provided with a direction changer (32).

20. Device according to claim 3, **characterised in that** the device (8) for continuously cooling the catalyst containers is in the form of a tunnel (33) provided, in its lower portion, with a conveyor belt (37) and, in its upper portion, with heat exchangers (35), preferably with air propulsion ventilators.

21. Device according to claim 3, **characterised in that** the means (9) for accumulating the catalyst containers before the subsequent storage, packaging or assembly is directly connected to the output of the cooling device (8) and consists of a ramp inclined downwardly from said outlet, this ramp being provided with rear and lateral projections allowing a relatively great buffer accumulation.

22. Device according to any one of claims 3 to 21, **characterised in that** the various work stations are connected to one another by means of transfer devices in a continuous line.

23. Device according to any one of claims 3 to 21, **characterised in that** all of the devices involved in mounting the pre-cut tubes, for optional mounting of insulating cones in the ends thereof, in heating said ends, in deforming said ends by flow turning or pressing, in dismounting, transferring and also cooling the obtained containers, are controlled and monitored by means of a computerised control device and electronic transmission circuits.
